# EUROPEAN PATENT APPLICATION

(11) **EP 3 553 921 A1**
(43) Date of publication of application: **16.10.2019**
(21) Application number: 18166511.8
(22) Date of filing: 10.04.2018
(51) Int. Cl.: H02K 1/30, H02K 1/27, H02K 7/06

(54) **ACTUATING CYLINDER WITH ROTOR SHAFT SUPPORTING PERMANENT MAGNETS**

(71) Applicant: SKF Motion Technologies AB, 51550 Gothenburg (SE)
(72) Inventor: Benoit, Laurent, 73800 La Chavanne (FR); Eyraud, Emmanuel, 4133 4133 (CH)
(74) Representative: Heyerhoff Geiger & Partner Patentanwälte PartGmbB

(57) **Abstract**

The invention relates to an actuating cylinder (10) comprising a housing (12); an actuation rod (14) mounted to be movable longitudinally relative to the housing (12); an electric motor (16) provided with a stator (20), and a rotor (22) having a rotating rotor shaft (24) and permanent magnets (28) supported by the said rotor shaft (24); and a screw mechanism (18) including a screw (40) provided with an external thread (41) and connected to the actuation rod (14), the rotor shaft (24) being disposed around the screw (40) and having an internal thread (25), and a plurality of rolling elements (42) engaged with the internal and external threads (25, 41), the rotational movement of the rotor shaft (24) being converted into a linear movement in translation of the screw (40) and of the actuation rod (14). The permanent magnets (28) are fixed to an outer surface (26-1) of a sleeve (26), said sleeve (26) being fixed onto an outer surface (24-2) of the rotor shaft (24).

## Description

### TECHNICAL FIELD OF THE INVENTION

The invention relates to the field of actuating cylinders, in particular the field of compact electromechanical cylinders with integrated electric motor.

### BACKGROUND OF THE INVENTION

An electromechanical actuating cylinder generally comprises a housing, an actuation rod mounted so as to be movable longitudinally relative to the housing, an electric motor having a stator and a rotor, a mechanism for converting the rotational movement of the rotor shaft of the motor into a linear movement in translation of the actuation rod, and at least one bearing for guiding in rotation and supporting the rotor shaft with respect to the housing.

Such mechanism can be a screw mechanism including a screw provided with an external thread, a nut disposed around the screw and having an internal thread, and a plurality of rolling elements engaged with the internal and external threads. Said elements can be rollers and the mechanism is of roller screw type, or balls and the mechanism is of ball screw type.

In the case of inverted planetary screw mechanism, the nut is driven in rotational movement by the rotor of the electric motor, the screw having then a translating movement by the intermediate of the rolling elements. Said screw is connected to the rod. In order to guide in rotation and support the nut, the electromechanical cylinder further comprises bearings arranged between the nut and the housing.

The rotor of electric motor comprises a rotor shaft and a plurality of permanent magnets supported by said rotor shaft. The rotor shaft is advantageously the nut of the inverted planetary screw mechanism.

The permanent magnets are generally directly glued onto an outer surface of the rotor shaft. However, during maintenance operations, the rotor shaft has to be extracted and replaced in case of deterioration or malfunction of the permanent magnets. These are expensive operations.

Moreover, a complete rotor shaft with glued magnets and of given dimensions is only dedicated to a specific actuating cylinder. It is desirable to provide a modular design of actuating cylinder with some standardized components.

### SUMMARY OF THE INVENTION

The aim of the invention is to solve the above difficulties.

To this end, the invention relates to an actuating cylinder comprising a housing; an actuation rod mounted to be movable longitudinally relative to the housing; an electric motor provided with a stator, and a rotor having a rotating rotor shaft and permanent magnets supported by the said rotor shaft; a screw mechanism including a screw provided with an external thread and connected to the actuation rod, the rotor shaft being disposed around the screw and having an internal thread, and a plurality of rolling elements engaged with the internal and external threads, the rotational movement of the rotor shaft being converted into a linear movement in translation of the screw and of the actuation rod.

According to the invention, the permanent magnets are fixed to an outer surface of a sleeve, said sleeve being fixed onto an outer surface of the rotor shaft.

According to further aspects of the invention which are advantageous but not compulsory, such an actuating may incorporate one or several of the following features:
- The housing comprises a main body, a front cover, and a rear cover.
- The actuating cylinder comprises at least one bearing for guiding in rotation and supporting the rotor shaft with respect to the housing.
- The rolling elements of screw mechanism are rollers having each an external thread which is engaged in the external and internal threads of the screw and the rotor shaft, respectively.
- The rolling elements of screw mechanism are balls engaged in external and internal threads of screw and rotor shaft, respectively.
- The housing comprises a stepped bore with an inwardly projecting shoulder, the stator being in axial abutment against the said shoulder.
- The outer surface of rotor shaft is stepped with an outwardly projecting shoulder, the sleeve being in axial abutment against the said shoulder.
- The permanent magnets are glued onto the outer surface of sleeve.
- The sleeve is press fitted onto the outer surface of rotor shaft.
- The sleeve is glued onto the outer surface of rotor shaft.

### BRIEF DESCRIPTION OF THE DRAWINGS

The invention will now be explained in correspondence with the annexed figures, as illustrative examples, without restricting the object of the invention:
- the Figure 1 is an axial sectional view of an electromechanical actuating cylinder in accordance with the present invention,
- the Figure 2 is an exploded perspective view of a rotor provided to the actuating cylinder of Figure 1, and
- the Figure 3 is a perspective view of the assembled rotor.

### DETAILED DESCRIPTION OF SOME EMBODIMENTS

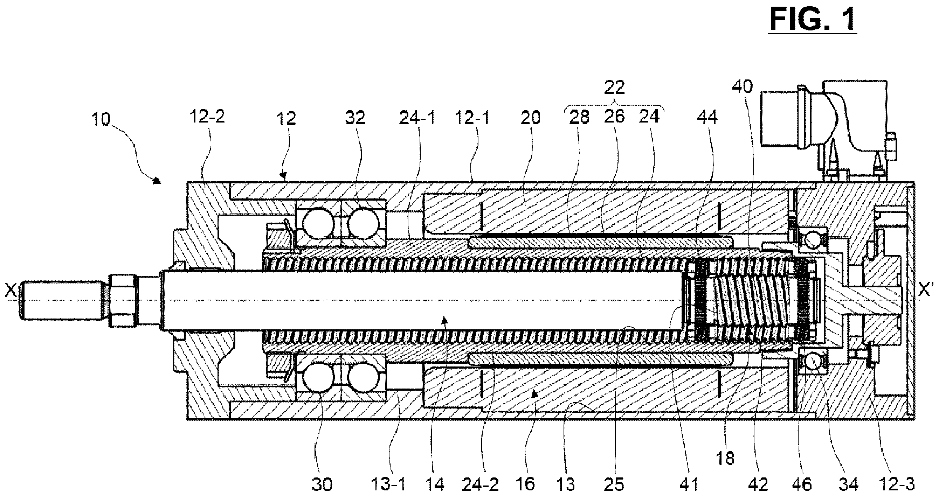

In the Figure 1, a compact electromechanical actuating cylinder, referenced 10 as a whole, extends along a longitudinal axis X-X'. The actuating cylinder 10 comprises a housing 12, an actuation rod 14 movable axially and coaxially to the axis X-X', an electric motor 16, and an inverted planetary roller screw mechanism 18 disposed inside the housing 12. The screw mechanism 18 is disposed radially between the electric motor 16 and the actuation rod 14.

The mechanism 18 allows the conversion of rotation movement of the electric motor 16 into a linear movement in translation of the actuation rod 14 along the axis X-X'. The electric motor 16 and the screw mechanism 18 are housed entirely within the housing 12. The actuation rod 14 extends through the housing 12 and protrudes axially to the outside.

In the illustrated exemplary embodiment, the housing 12 comprises a tubular main body 12-1 having a bore 13, a front cover 12-2 and a rear cover 12-3. The said covers are each fixed at one end of the main body 12-1.

The electric motor 16 comprises a stator 20 fixed on the housing 12, and a rotor 22. The stator 20 is fixed in the bore 13 of main body 12-1 of housing 12. The bore 13 is advantageously stepped and comprises an inwardly radially projecting shoulder 13-1, the stator being in axial abutment against said shoulder 13-1 towards a front axial direction.

According to the invention, the rotor 22 is provided with a tubular rotor shaft 24, a sleeve 26 and a plurality of permanent magnets 28 supported by said sleeve 26.

The sleeve 26 comprises an outer cylindrical surface 26-1, and a cylindrical bore 26-2.

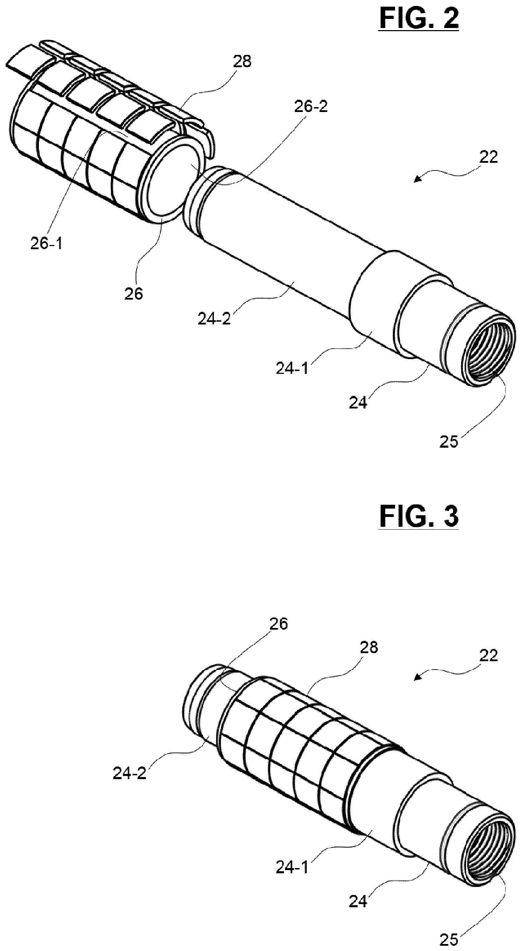

As illustrated in Figures 2 and 3, the permanent magnets 28 are fixed to the outer cylindrical surface 26-1 of tubular sleeve 26. Advantageously, the permanent magnets 28 are glued to said sleeve 26.

The tubular sleeve 26 is coaxial with the rotor shaft 24, and is mounted around an outer cylindrical surface 24-2 of said rotor shaft 24. Advantageously, the cylindrical bore 26-2 of sleeve 26 is press fitted onto the outer cylindrical surface 24-2 of rotor shaft. Alternatively, the sleeve 26 is glued onto the rotor shaft 24, or may be fixed by any other suitable means.

The outer surface of rotor shaft 24 is stepped and comprises an outwardly projecting shoulder 24-1. The sleeve 26 is in axial abutment against the said shoulder 24-1 towards a front axial direction. The shoulder 24-1 permits to precisely position the sleeve 26 with permanent magnets 28 onto the rotor shaft 24 with respect to the stator 20 of electric motor 16.

Thanks to the invention, during maintenance operations, the sleeve 26 with the permanent magnets 28 can be easily extracted and replaced in case of defect, the rotor shaft 24 being kept. The replaced parts are then less expensive than a complete rotor shaft.

Another advantage of the invention is that a standardized sleeve with magnets can be provided to a plurality of rotor shaft lengths. Such sleeve is assembled onto a particular rotor shaft on request only. This will participate to decrease the number of components on stock. Even if an intermediate part is added, the global costs are decreased.

The rotor shaft 24 extends axially on either side of the stator 20. The electric motor 16 can be of the brushless type, or alternatively of any other suitable type.

In order to guide in rotation and support the rotor shaft 24 with respect to the housing 12, the actuating cylinder 10 also comprises two front rolling bearings 30, 32 and one rear rolling bearing 34. In the illustrated exemplary embodiment, the bearings 30, 32, 34 are each of ball type. Alternatively, the bearing may be of any other suitable types, for example with tapered rollers or cylindrical rollers.

The inverted planetary roller screw mechanism 18 comprises a screw 40, which is coaxial and connected to a second end 14-2 of the actuation rod 14.

The rotor shaft 24 is of tubular shape, coaxial with the screw 40 and is disposed around said screw 40. The screw 40 comprises an external thread 41, and the rotor shaft 24 comprises an internal thread 25 of which the inner diameter is greater than the outer diameter of the external thread 41 of screw 40.

The screw mechanism 18 further comprises a plurality of rollers 42 having each an external thread (not referenced) which is engaged in the external and internal threads 41, 25 of the screw 40 and the rotor shaft 24, respectively. The rollers 42 are identical to one another and are distributed uniformly around the screw 40. Each roller 42 extends along an axis parallel to the screw axis. As is known per se, each roller 42 comprises, at each end (not referenced), an outer toothing engaged with a synchronization toothing of the screw, and a journal extending axially to the outside from the toothing and housed in a recess in one of the spacer rings 44, 46 mounted around said screw 40.

As an alternate not shown, the rolling elements are balls engaged in external and internal threads of screw and rotor shaft, respectively.

The actuation rod 14 is connected to the screw 40 of the screw mechanism 18. The rotation of the rotor shaft 24 of the electric motor 16 is converted into a translation of the screw 40 and of the actuation rod 14 along the axis X-X'.

Representative, non-limiting examples of the present invention were described above in details with reference to the attached drawings. This detailed description is merely intended to teach a person of skill in the art further details for practicing preferred aspects of the present teachings and is not intended to limit the scope of the invention. Furthermore, each of the additional features and teachings disclosed above may be utilized separately or in conjunction with other features and teachings to provide improved actuating cylinder.

Moreover, various features of the above-described representative examples, as well as the various independent and dependant claims below, may be combined in ways that are not specifically and explicitly enumerated in order to provide additional useful embodiments of the present teachings.

## Claims

1. Actuating cylinder (10) comprising:
- a housing (12);
- an actuation rod (14) mounted to be movable longitudinally relative to the housing (12);
- an electric motor (16) provided with a stator (20), and a rotor (22) having a rotating rotor shaft (24) and permanent magnets (28) supported by the said rotor shaft (24); and
- a screw mechanism (18) including a screw (40) provided with an external thread (41) and connected to the actuation rod (14), the rotor shaft (24) being disposed around the screw (40) and having an internal thread (25), and a plurality of rolling elements (42) engaged with the internal and external threads (25, 41), the rotational movement of the rotor shaft (24) being converted into a linear movement in translation of the screw (40) and of the actuation rod (14);
**characterized in that** the permanent magnets (28) are fixed to an outer surface (26-1) of a sleeve (26), said sleeve (26) being fixed onto an outer surface (24-2) of the rotor shaft (24).

2. Actuating cylinder according to the claim 1, wherein the housing (12) comprises a stepped bore (13) with an inwardly projecting shoulder (13-1), the stator (20) being in axial abutment against the said shoulder (13-1).

3. Actuating cylinder according to any of the preceding claims, wherein the outer surface (24-2) of rotor shaft (24) is stepped with an outwardly projecting shoulder (24-1), the sleeve (26) being in axial abutment against the said shoulder (24-1).

4. Actuating cylinder according to any of the preceding claims, wherein the permanent magnets (28) are glued onto the outer surface (26-1) of sleeve (26).

5. Actuating cylinder according to any of the preceding claims, wherein the sleeve (26) is press fitted onto the outer surface (24-2) of rotor shaft (24).

6. Actuating cylinder according to any of the claims 1 to 4, wherein the sleeve (26) is glued onto the outer surface (24-2) of rotor shaft (24).

7. Actuating cylinder according to any of the preceding claims, wherein the housing (12) comprises a main body (12-1), a front cover (12-2), and a rear cover (12-3).

8. Actuating cylinder according to any of the preceding claims, wherein the actuating cylinder (10) comprises at least one bearing (30, 32, 34) for guiding in rotation and supporting the rotor shaft (24) with respect to the housing (12).

9. Actuating cylinder according to any of the preceding claims, wherein the rolling elements of screw mechanism (18) are rollers (42) having each an external thread which is engaged in the external and internal threads (41, 25) of the screw (40) and the rotor shaft (24), respectively.

10. Actuating cylinder according to any of the claims 1 to 8, wherein the rolling elements of screw mechanism (18) are balls engaged in external and internal threads (41, 25) of screw (40) and rotor shaft (24), respectively.
